# FASCICULE DE BREVET EUROPEEN

(11) **EP 0 377 353 B1**
(45) Date de publication et mention de la délivrance du brevet: **03.03.1993**
(21) Numéro de dépôt: 89403253.1
(22) Date de dépôt: 24.11.1989
(51) Int. Cl.: B29C 49/42, B29C 49/68, B29C 31/00, B65G 19/02

(54) **Chaîne automatisée de fabrication de corps creux en matière plastique**
Automatisierte Fertigungsstrasse zum Herstellen hohler Körper aus Kunststoff
Automated production line for making hollow plastic articles

(30) Priorité: 02.12.1988 FR 8815811
(43) Date de publication de la demande: 11.07.1990
(73) Titulaire: A.D.S. S.A., 95310 St. Ouen l'Aumone (FR)
(72) Inventeur: Di Settembrini, Antoine, F-83220 Le Pradet (FR)
(74) Mandataire: Chambon, Gérard

(56) Documents cités:
- EP-A- 0 070 931
- DE-C- 602 672
- FR-A- 2 424 120
- GB-A- 2 025 348
- GB-A- 2 097 322
- GB-A- 2 116 106
- US-A- 4 116 325
- US-A- 4 313 720
- US-A- 4 694 951

## Description

L'invention concerne une chaîne automatisée de fabrication de corps creux à partir de préformes thermoplastiques pourvues chacune d'une bague. L'invention est plus particulièrement destinée à la fabrication de récipients thermoplastiques à orientation biaxiale, tels que des bouteilles ou des flacons.

Il est connu de fabriquer des bouteilles thermoplastiques à orientation biaxiale à partir de préformes obtenues, par exemple, par injection.

Une préforme se présente généralement sous la forme d'un tube fermé à une extrémité, tandis que son autre extrémité ouverte est pourvue d'une bague, éventuellement munie à sa base d'une contre-bague sous forme d'une colerette en saillie. La bague et éventuellement la contre-bague de chaque préforme sont destinées à constituer la bague et éventuellement la contre-bague du col de la bouteille finie, pour le bouchage de celle-ci, et c'est pourquoi ladite bague peut présenter éventuellement un filetage. La bague et la contre-bague de la préforme n'ont donc pas à subir de transformation après la fabrication de la préforme, au contraire du reste de celle-ci, qui devra subir une expansion au cours d'une opération de moulage dite d'étirage-soufflage.

Les préformes thermoplastiques après fabrication, doivent subir un traitement thermique approprié, antérieurement à l'opération de moulage par étirage-soufflage, afin d'amener leur matière à une bonne température d'orientation moléculaire. De ce traitement thermique dépendra notamment, certaines caractéristiques du produit fini, telles que résistance, transparence, etc.

Le moulage des bouteilles s'effectue généralement lors de l'opération dite d'étirage-soufflage, au moyen d'un moule qui vient enserrer chaque préforme et d'une canne d'étirage et de soufflage, qui est introduite dans la partie ouverte de ladite préforme, pour en assurer l'étirage et l'expansion par soufflage sous pression.

Les machines prévues pour ce type de fabrication réunissent parfois plusieurs des appareils nécessaires à la fabrication complète et qui sont aptes à effectuer les opérations précitées de fabrication des préformes et/ou de chauffage des préformes et/ou de moulage par étirage-soufflage.

La complexité de toutes les machines existantes réside principalement dans les problèmes de transport des préformes et du transfert de celles-ci d'un poste à un autre.

L'inventeur a notamment cherché à simplifier au mieux les problèmes de transfert des préformes et éventuellement aussi celui des produits finis.

L'invention propose une chaîne automatisée de fabrication de corps creux à partir de préformes thermoplastiques tubulaires pourvues chacune à une extrémité ouverte d'une bague et éventuellement d'une contre-bague, et comportant au moins un appareil d'alimentation des préformes, un appareil de chauffage des préformes et un appareil de moulage par soufflage des produits finis. La chaîne selon l'invention est remarquable en ce que les appareils sont aménagés de manière telle que lesdites préformes sont transportées au moins depuis l'appareil d'alimentation jusqu'à au moins la sortie de l'appareil de chauffage en passant à l'intérieur dudit appareil de chauffage, au moyen d'au moins une paire de rails sur lesquels chaque préforme glisse par la bague et/ou la contre-bague dont elle est munie, son extrémité ouverte étant tournée vers le haut. Si la préforme ne comporte qu'une bague, celle-ci fait saillie et permet de glisser sur les rails, mais si elle comporte une contre-bague, celle-ci fait saillie par rapport à la bague et c'est alors par la contre-bague que le préforme peut glisser.

L'appareil d'alimentation comporte, par exemple, un moyen de chargement des préformes, un moyen d'élévation de celles-ci vers un moyen de redressement et de distribution des préformes, et au moins une paire de rails d'évacuation des préformes, laquelle est disposée entre ledit moyen de distribution et l'appareil de chauffage.

Selon un mode de réalisation, l'appareil de chauffage comporte au moins une paire de rails de glissement sur lesquels sont mues les préformes, entre un poste d'entrée relié avec l'appareil d'alimentation et un poste de sortie relié à l'appareil de moulage, devant au moins un four de chauffage, les préformes étant entraînées en translation entre les postes respectivement d'entrée et de sortie par un moyen d'entraînement.

Avantageusement dans ce cas, le poste d'entrée de l'appareil de chauffage comporte un distributeur de préformes et le poste de sortie, un moyen de reprise pour évacuer chaque préforme vers l'appareil de moulage.

Selon un mode de réalisation préféré, les rails de l'appareil de chauffage sont pourvus ou assujettis à des tubes de circulation d'un fluide de refroidissement, lesdits tubes étant aménagés en majeure partie au-dessus du plan défini par les rails de glissement des préformes.

Par exemple, le moyen d'entraînement des préformes peut comporter une pluralité de doigts d'entraînement qui sont mus dans un mouvement sans fin selon une trajectoire comportant au moins une partie parallèle aux rails de glissement dudit appareil de chauffage et qui sont destinés chacun à venir s'introduire par un embout dans l'extrémité ouverte d'une préforme pour l'entraîner dans son mouvement, chaque doigt venant en prise par son embout avec une préforme au poste d'entrée pour la libérer au poste de sortie. De préférence, les doigts sont montés sur des supports fixés sur une paire de chaînes fermées et mues selon des plans sensiblement verticaux, chaque doigt ayant son embout en prise avec une préforme durant son trajet dans la partie inférieure de la trajectoire, laquelle partie est parallèle aux rails de glissement de l'appareil de chauffage.

De manière tout à fait originale, l'embout de chaque doigt est monté de manière à pouvoir coulisser axialement entre au moins deux positions, tandis que des cames sont prévues aux postes respectivement d'entrée et de sortie de l'appareil de chauffage, de manière à soulever et/ou maintenir en partie soulevé ledit embout d'une part, juste avant son introduction dans la préforme et, d'autre part, juste avant l'évacuation de ladite préforme par le moyen de reprise, la mise en place de l'embout dans la préforme au poste d'entrée étant effectuée, par exemple, par simple gravité ou extension d'un ressort. En outre et de préférence, chaque doigt est monté au moins en partie rotatif tandis qu'un moyen d'entraînement en rotation des doigts est prévu de manière à pouvoir entraîner à volonté en rotation les préformes sur au moins une partie de leur trajectoire dans l'appareil de chauffage.

De façon non obligatoire, l'appareil de chauffage comporte une soufflerie dans sa partie supérieure destinée à créer une ventilation dirigée vers le bas, au-dessus d'un plan défini sensiblement par les rails de glissement de l'appareil de chauffage.

L'invention sera bien comprise et d'autres particularités apparaîtront à la lecture de la description qui va suivre et qui se réfère aux dessins annexés dans lesquels:
- la figure 1 représente schématiquement en élévation une chaîne de fabrication selon l'invention,
- la figure 2 est une vue schématique de dessus de la figure 1,
- la figure 3 montre en partie l'intérieur d'un appareil de chauffage selon l'invention,
- la figure 4 montre en coupe transversale, l'appareil de chauffage de la figure 3 et,
- la figure 5 représente plus en détail, un doigt d'entraînement des préformes.

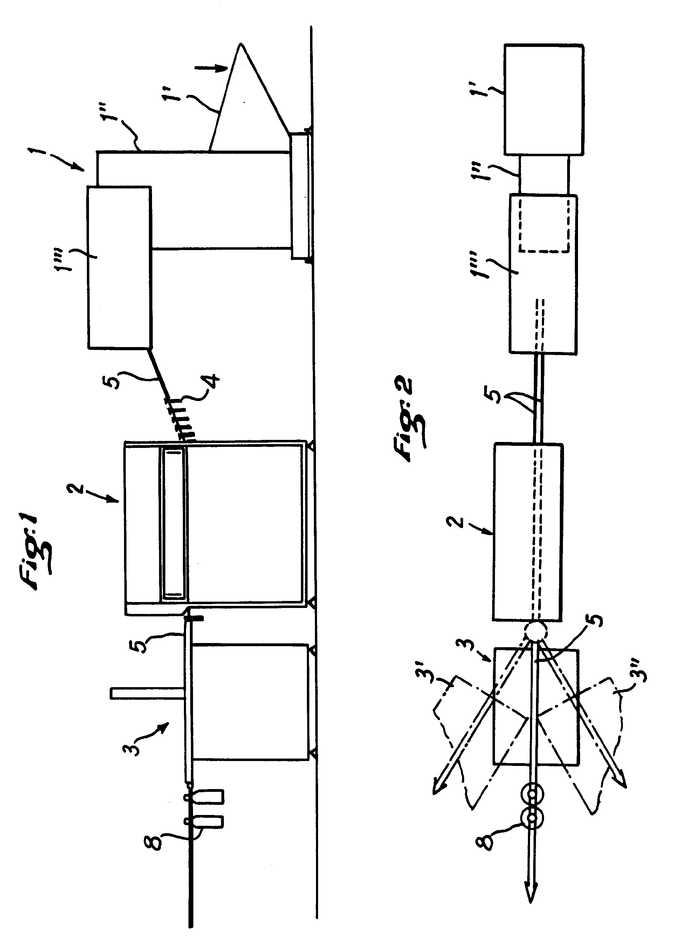

Les figures 1 et 2 montrent une chaîne de fabrication selon l'invention. Cette chaîne comporte, notamment, un appareil d'alimentation 1 des préformes, un appareil de chauffage 2 ou de réchauffage des préformes et un appareil de moulage par étirage-soufflage 3.

L'appareil d'alimentation 1 comporte un moyen de chargement 1′, pour charger en vrac, manuellement ou automatiquement des préformes préfabriquées, un moyen d'élévation 1˝ desdites préformes et un moyen de redressement et de distribution 1˝′ de celles-ci.

Le moyens de chargement 1′ peut être sous forme, par exemple, d'une trémie, le moyen d'élévation peut être sous forme d'un tapis élévateur et le moyen de redressement et de distribution peut comporter, par exemple, une table vibrante ou un autre moyen. On peut noter dès à présent, que l'appareil d'alimentation 1, tel que décrit ci-avant, est prévu pour des préformes refroidies après fabrication (généralement moulées par injection), mais il peut être envisagé d'utiliser directement des préformes encore chaudes provenant de fabrication, auquel cas les moyens 1′ et 1˝ sont supprimés, les préformes étant directement réceptionnées par le moyen 1˝′.

L'appareil d'alimentation 1 est prévu de manière telle que les préformes schématisées en 4 sur les figures 1, 3 et 4 comportent une paire de rails 5 inclinés, prévus pour l'évacuation desdites préformes par gravité vers l'appareil de chauffage 2.

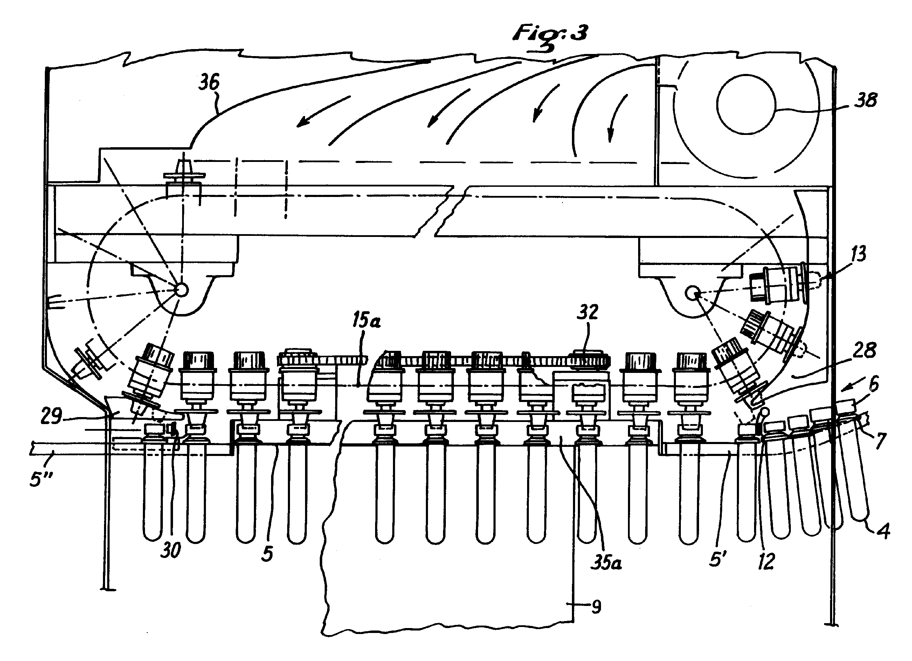

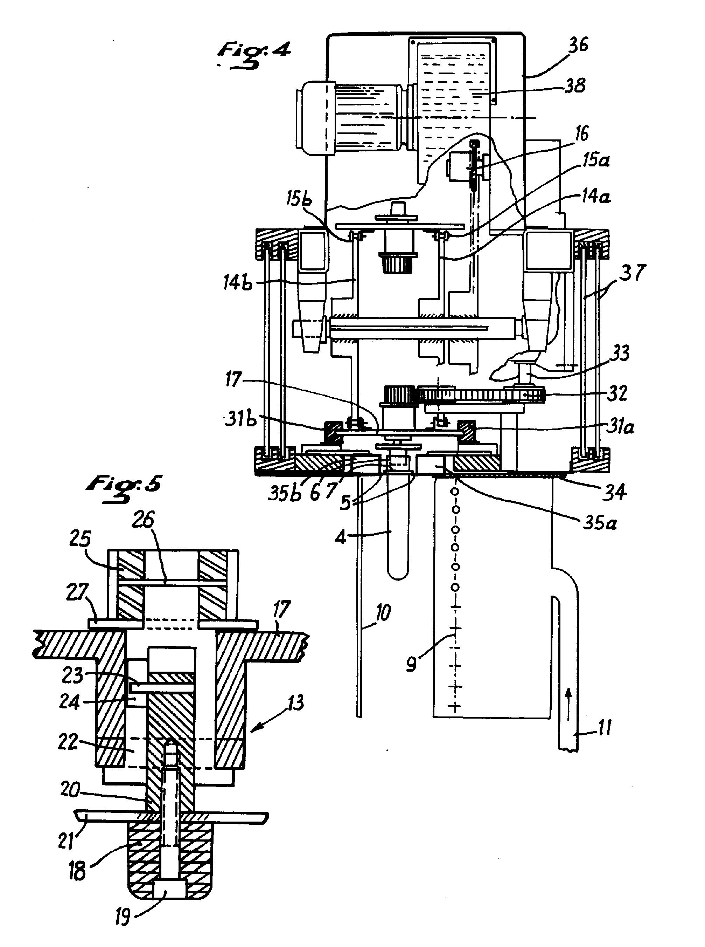

Comme le montrent plus particulièrement les figures 3 et 4, chaque préforme se présente sous la forme d'un tube bouché à une extrémité et comportant à son autre extrémité ouverte, une bague 6 filetée ou non et une contre-bague 7, sous forme d'une colerette en saillie. La bague 6 et la contre-bague 7 de la préforme constituent une partie définitive que l'on retrouve intacte pour former le col de chaque produit fini, c'est-à-dire de chaque bouteille qui sort de l'appareil de moulage 3, ces bouteilles étant schématisées en 8 sur les figures 1 et 2. C'est par la contre-bague 7 que chaque préforme 4 peut glisser sur la paire de rails 5 aménagés entre l'appareil 1 et l'appareil 2, son extrémité ouverte étant dirigée vers le haut. Toutefois, en l'absence de contre-bague 7, chaque préforme peut glisser par sa bague 6. A la sortie de l'appareil 2, une même paire de rails 5 permet de transférer les préformes dudit appareil 2 vers l'appareil 3. Sur la figure 2, on peut constater qu'au lieu et place de l'appareil 3, il peut parfaitement être prévu, par exemple, deux appareils du même type 3′ et 3˝ vers lesquels les préformes sont dirigées alternativement. A la sortie de l'appareil 3 ou des appareils 3′ et 3˝, les préformes ont été étirées-soufflées pour donner des produits finis tels que les bouteilles 8 déjà citées. Comme le montrent en outre les figures 1 et 2, les bouteilles 8 peuvent être transférées sur une paire de rails en glissant par la contre-bague de leur col vers un ou plusieurs autres postes disposés en aval de la chaîne représentée, tel par exemple qu'un poste de mise en place d'un fond.

La paire de rails 5 disposée d'une part, entre l'appareil d'alimentation 1 et l'appareil de chauffage 2 et, d'autre part, en aval dudit appareil 2 se retrouve à l'intérieur de ce dernier, comme le montrent plus particulièrement les figures 3 et 4.

L'appareil de chauffage 2 est destiné, comme déjà dit, à réchauffer les préformes jusqu'à une température adéquate en vue de préparer le moulage par étirage-soufflage, lequel est effectué dans l'appareil 3. Pour ce faire, les préformes doivent passer dans un four. Le four est, par exemple, constitué de manière connue par une rampe 9 de tubes émetteurs de rayons infrarouges, par un réflecteur 10 de rayons infrarouges et par un dispositif de ventilation schématisé par une canalisation de soufflage 11 (figure 4).

Les préformes arrivent dans l'appareil de chauffage 2 par un poste d'entrée muni de glissières 5′ faisant en quelque sorte la jonction entre les rails de l'appareil 1 et ceux de l'appareil 2, et d'un distributeur, schématisé en 12 sur la figure 3. Le distributeur 12 est destiné à distribuer les préformes provenant de l'appareil 1, au fur et à mesure de l'avancement d'un moyen d'entraînement desdites préformes, dont il sera question ci-après. Les préformes sortent de l'appareil 2 par un poste de sortie muni de glissières 5˝ qui sont en continuité avec les rails 5.

Le dispositif d'entraînement des préformes comporte une pluralité de doigts, tels que 13, comme le montrent la figure 3 et plus en détail la figure 5.

Les doigts 13 sont mûs par un dispositif d'entraînement qui comporte quatre roues dentées, telles que 14a et 14b sur la figure 4 (les deux autres roues, non visibles sur cette figure, étant disposées à l'autre extrémité de l'appareil de chauffage) et deux chaînes sans fin, telles que schématisées en 15a et 15b sur la figure 4 (et en pointillés en ce qui concerne la chaîne 15a, sur la figure 3). Les chaînes 15a et 15b sont montées de manière à être mûes, au moyen d'un moteur 16, selon deux plans sensiblement verticaux et de façon à avoir au moins leurs brins inférieurs rectilignes et parallèles aux rails 5, comme le montre la figure 3.

Les doigts 13 sont montés sur les chaînes 15a et 15b au moyen de supports sous forme de plaquettes 17 dont ils sont munis (figures 4 et 5). Comme le montre plus particulièrement la figure 5, chaque doigt 13 comporte, outre la plaquette 17 dont il vient d'être question, un embout tronconique 18 fixé par une vis 19 à un piston 20 entre lesquels est disposée une rondelle 21.

Le piston 20 est monté coulissant dans un axe 22 de telle sorte qu'il puisse se mouvoir axialement dans celui-ci entre au moins deux positions déterminées par une goupille 23 et une cavité 24 aménagée dans ledit axe 22.

La goupille 23 et la lumière 24 sont telles que le piston 20 peut avoir un mouvement axial tout en restant solidaire en rotation dudit axe 22. Comme le montre encore la figure 5, l'axe 22 est solidaire d'un pignon 25 fixé à celui-ci par une goupille 26, le pignon 25 étant aménagé au-dessus de la plaquette 17 par l'intermédiaire d'au moins une rondelle 27.

Comme on peut le voir sur les figures 3 et 4, chaque doigt 13 est fixé sur les chaînes 15a et 15b de manière à avoir son embout mobile 18 tourné vers l'extérieur de telle sorte que par gravité, celui-ci a tendance à prendre sa position la plus ressortie vers l'extérieur dans la partie inférieure de sa trajectoire et au contraire, sa position la plus rentrée dans la partie supérieure. Toutefois, il est possible de prévoir un ressort pour solliciter en permanence l'embout vers sa position la plus ressortie.

Le poste d'entrée de l'appareil 2 présente une came 28 et le poste de sortie une came 29 (figure 3).

Les cames 28 et 29 sont prévues pour soulever et/ou maintenir en partie soulevés les embouts 18 des doigts 13, en agissant sur les rondelles 21 (figure 5) aux postes respectivement d'entrée et de sortie, comme le montre la figure 3.

De la sorte, en coopération avec le distributeur 12, chaque doigt 13 arrive en fin de course de la came 28 juste au-dessus d'une préforme et son embout 18 vient s'introduire par gravité dans la partie ouverte de ladite préforme.

Au poste de sortie, la came 29 soulève au contraire l'embout 18 pour libérer la préforme qui est évacuée par tout moyen de reprise tel que, par exemple le bras 30 représenté sur la figure 3.

Afin d'obtenir un guidage parfait et ferme des doigts 13, au moins dans la partie de transport des préformes, l'appareil 2 est pourvu de glissières de guidage 31a, 31b rainurées de manière à guider et maintenir les plaquettes 17 des doigts 13 (figure 4).

Les préformes qui défilent dans le four à rayons infrarouges (9 à 11) sont de préférence entraînées en rotation pendant le mouvement translatif au moyen, par exemple, d'une courroie crantée 32 entraînée par un arbre moteur 33 et qui vient s'engrener avec les pignons 25 (figure 5) des doigts 13. De la sorte, les axes 22 entraînent en rotation les embouts 18 (figure 5), qui eux-mêmes entraînent les préformes.

Comme le montre bien la figure 4, le four (9 à 11) agit sur les préformes, à l'exception de leurs bagues 6 et contre-bagues 7, les rails 5 définissant un plan au-dessus duquel il n'est pas souhaitable et il est même déconseillé d'avoir une chaleur excessive.

C'est pourquoi l'invention prévoit au niveau des rails 5, un écran thermique 34 et de façon tout à fait originale, des tubes 35a, 35b (figures 3 et 4), dont la base se trouve au niveau des rails 5 et qui s'étendent le long desdits rails de manière à encadrer de part et d'autre les bagues 6 des préformes 4.

Dans les tubes 35a, 35b est prévue une circulation d'eau afin de refroidir cette partie.

En fait les rails 5 et les tubes 35a, 35b peuvent bien sûr être d'une seule pièce.

Toujours dans le but de séparer la partie four qui est ventilée, comme déjà dit, de la partie supérieure qui doit rester plus froide, l'invention prévoit de fermer ladite partie supérieure, par exemple par un capot 36 et des portes coulissantes 37 et de prévoir un ventilateur 38 (figures 3 et 4) de manière à créer au-dessus du plan défini par les rails 5, une ventilation dirigée vers le bas.

L'invention n'est pas limitée aux appareils décrits et il est bien sûr possible d'y incorporer des appareils en amont et en aval de ceux décrits ci-avant.

La sortie de l'appareil de chauffage 2 comportant des rails, les préformes sont amenées de préférence jusque dans l'appareil 3 en glissant aussi sur des rails, mais il est possible de reprendre les préformes par des pinces par exemple, destinées à venir prendre les préformes à la sortie de l'appareil 2 pour les placer dans l'appareil 3.

## Revendications

1. Chaîne automatisée de fabrication de corps creux à partir de préformes thermoplastiques (4) tubulaires pourvues chacune à une extrémité ouverte d'une bague (6) et éventuellement d'une contre-bague (7), et comportant au moins un appareil d'alimentation (1) des préformes, un appareil de chauffage (2) des préformes et un appareil de moulage par soufflage (3) des produits finis, chaîne caractérisée en ce que les appareils sont aménagés de manière telle que lesdites préformes sont transportées au moins depuis l'appareil d'alimentation (1) jusqu'à au moins la sortie de l'appareil de chauffage (2) en passant à l'intérieur dudit appareil de chauffage, au moyen d'au moins une paire de rails (5) sur lesquels chaque préforme glisse par la bague (6) et/ou la contre-bague (7) dont elle est munie, son extrémité ouverte étant tournée vers le haut.

2. Chaîne automatisée de fabrication selon la revendication 1, caractérisé en ce que l'appareil d'alimentation (1) comporte un moyen de chargement (1′) des préformes, un moyen d'élévation (1˝) de celles-ci vers un moyen de redressement et de distribution (1˝′) des préformes, et au moins une paire de rails (5) d'évacuation des préformes, laquelle est disposée entre ledit moyen de distribution (1˝′) et l'appareil de chauffage (2).

3. Chaîne automatisée de fabrication selon l'une des revendications 1 et 2, caractérisée en ce que l'appareil de chauffage (2) comporte au moins une paire de rails (5) de glissement sur lesquels sont mues les préformes, entre un poste d'entrée relié avec l'appareil d'alimentation (1) et un poste de sortie relié à l'appareil de moulage (3), devant au moins un four de chauffage (9 à 11), les préformes étant entraînées en translation entre les postes respectivement d'entrée et de sortie par un moyen d'entraînement (13, 14a, 14b, 15a, 15b, 16).

4. Chaîne automatisée de fabrication selon la revendication 3, caractérisée en ce que le poste d'entrée de l'appareil de chauffage comporte un distributeur (12) de préformes et le poste de sortie, un moyen de reprise (30) pour évacuer chaque préforme vers l'appareil de moulage (3).

5. Chaîne automatisée de fabrication selon l'une des revendications 3 et 4, caractérisée en ce que les rails (5) de l'appareil de chauffage sont pourvus ou assujettis à des tubes (35a,35b) de circulation d'un fluide de refroidissement, lesdits tubes étant aménagés en majeure partie au-dessus du plan défini par les rails de glissement des préformes.

6. Chaîne automatisée de fabrication selon l'une des revendications 3 à 5, caractérisée en ce que le moyen d'entraînement des préformes de l'appareil de chauffage comporte une pluralité de doigts d'entraînement (13) qui sont mus dans un mouvement sans fin selon une trajectoire comportant au moins une partie parallèle aux rails de glissement dudit appareil de chauffage et qui sont destinés chacun à venir s'introduire par un embout (18) dans l'extrémité ouverte d'une préforme pour l'entraîner dans son mouvement, chaque doigt venant en prise par son embout (18) avec une préforme au poste d'entrée pour la libérer au poste de sortie.

7. Chaîne automatisée de fabrication selon la revendication 6, caractérisé en ce que les doigts (13) sont montés sur des supports (17) fixés sur une paire de chaînes (15a, 15b) fermées et mues selon des plans sensiblement verticaux, chaque doigt ayant son embout (18) en prise avec une préforme durant son trajet dans la partie inférieure de la trajectoire, laquelle partie est parallèle aux rails (5) de glissement de l'appareil de chauffage.

8. Chaîne automatisée de fabrication selon l'ensemble des revendications 4 et 7, caractérisée en ce que l'embout (18) de chaque doigt (13) est monté de manière à pouvoir coulisser axialement entre au moins deux positions, tandis que des cames (28,29) sont prévues aux postes respectivement d'entrée et de sortie de l'appareil de chauffage, de manière à soulever et/ou maintenir en partie soulevé ledit embout d'une part, juste avant son introduction dans la préforme et, d'autre part, juste avant l'évacuation de ladite préforme par le moyen de reprise (30).

9. Chaîne automatisée de fabrication selon l'une des revendications 6 et 7, caractérisée en ce que chaque doigt (13) est monté au moins en partie rotatif tandis qu'un moyen d'entraînement en rotation (32,33) des doigts est prévu de manière à pouvoir entraîner à volonté en rotation les préformes sur au moins une partie de leur trajectoire dans l'appareil de chauffage.

10. Chaîne automatisée de fabrication selon l'une des revendications 1 à 9, caractérisée en ce que l'appareil de chauffage comporte une soufflerie (38) dans sa partie supérieure destinée à créer une ventilation dirigée vers le bas, au-dessus d'un plan défini sensiblement par les rails (5) de glissement de l'appareil de chauffage.

## Patentansprüche

1. Automatisierte Fertigungsstrasse zum Herstellen von Hohlkörpern aus rohrförmigen thermoplastischen Vorformlingen (4), die jeweils an einem offenen Ende mit einem Ring (6) und möglicherweise mit einem Stützring (7) versehen sind, wobei die Fertigungsstrasse mindestens eine Beschickungsvorrichtung (1) für die Vorformlinge, eine Heizvorrichtung (2) für die Vorformlinge und eine Vorrrichtung (3) zum Blasformen der fertigen Produkte aufweist, dadurch gekennzeichnet, daß die Vorrichtungen derart angeordnet sind, daß die Vorformlinge wenigstens von der Beschickungsvorrichtung (1) bis wenigstens zur Austrittsöffnung der Heizvorrichtung (2) transportiert werden, wobei sie das Innere der Heizvorrichtung mittels wenigstens eines Schienenpaares (5) passieren, auf welchem jeder Vorformling mittels des Ringes (6) und/oder des Stützringes (7) gleitet, mit denen er versehen ist, wobei sein offenes Ende nach oben zeigt.

2. Automatisierte Fertigungsstrasse gemäß Anspruch 1, dadurch gekennzeichnet, daß die Beschickungsvorrichtung (1) ein Mittel (1′) zum Aufgeben der Vorformlinge, ein Mittel (1˝) zum Heben derselben zu einem Mittel zum Ausrichten und Verteilen (1˝′) der Vorformlinge und wenigstens ein Schienenpaar (5) zur Abgabe der Vorformlinge aufweist, welches zwischen dem Verteilungsmittel (1˝′) und der Heizvorrichtung (2) angeordnet ist.

3. Automatisierte Fertigungsstrasse gemäß einem der Ansprüche 1 und 2, dadurch gekennzeichnet, daß die Heizvorrichtung (2) wenigstens ein Gleitschienenpaar (5) aufweist, auf welchem die Vorformlinge zwischen einer mit der Beschickungsvorrichtung (1) verbundenen Eintrittsstation und einer mit der Formgebungsvorrichtung (3) verbundenen Austrittsstation vor wenigstens einem Heizofen (9 bis 11) bewegt werden, wobei die Vorformlinge zwischen der Eintritts- bzw. Austrittsstation mittels einer Antriebseinrichtung (13, 14a, 14b, 15a, 15b, 16) eine Translationsbewegung ausführen.

4. Automatisierte Fertigungsstrasse gemäß Anspruch 3, dadurch gekennzeichnet, daß die Eintrittsstation der Heizvorrichtung einen Verteiler (12) für die Vorformlinge und die Austrittsstation ein Entnahmemittel (30) aufweist, um jeden Vorformling in Richtung auf die Formgebungsvorrichtung (3) auszutragen.

5. Automatisierte Fertigungsstrasse gemäß einem der Ansprüche 3 und 4, dadurch gekennzeichnet, daß die Schienen (5) der Heizvorrichtung an Rohren (35a, 35b) zur Zirkulation einer Kühlflüssigkeit vorgesehen oder befestigt sind, wobei die Rohre zum überwiegenden Teil oberhalb der Ebene angebracht sind, welche durch die Gleitschienen der Vorformlinge definiert ist.

6. Automatisierte Fertigungsstrasse gemäß einem der Ansprüche 3 bis 5, dadurch gekennzeichnet, daß das Mittel zum Hindurchführen durch die Heizvorrichtung mehrere Mitnehmerzapfen (13) aufweist, die in einer Endlosbewegung entlang einer Bahn bewegt werden, die wenigstens einen zu den Gleitschienen der Heizvorrichtung parallelen Teil aufweist, wobei die Mitnehmerzapfen alle dazu dienen, mit einem Ansatzstück (18) in das offene Ende eines Vorformlings geführt zu werden, um ihn bei seiner Bewegung mitzunehmen, und jeder Zapfen mit einem Vorformling durch sein Ansatzstück (18) an der Eintrittsstation in Eingriff gelangt, um ihn an der Austrittsstation freizugeben.

7. Automatisierte Fertigungsstrasse gemäß Anspruch 6, dadurch gekennzeichnet, daß die Zapfen (13) auf Trägern (17) montiert sind, die an einem geschlossenen und in im wesentlichen vertikalen Ebenen bewegten Kettenpaar (15a, 15b) befestigt sind, wobei das Ansatzstück (18) jedes Zapfens während seiner Bewegung auf dem unteren Teil der Bahn mit einem Vorformling in Eingriff ist, welcher zu den Gleitschienen (5) der Heizvorrichtung parallel ist.

8. Automatisierte Fertigungsstrasse gemäß den Ansprüchen 4 bis 7, dadurch gekennzeichnet, daß das Ansatzstück (18) jedes Zapfens (13) derart montiert ist, daß es axial zwischen wenigstens zwei Positionen gleiten kann, während Kurven (28, 29) an der Eintritts- bzw. Austrittsstation der Heizvorrichtung vorgesehen sind, um das Ansatzstück anzuheben und/oder teilweise angehoben zu halten, einerseits unmittelbar vor seiner Einführung in den Vorformling, andererseits unmittelbar vor der Entnahme des besagten Vorformlings durch das Entnahmemittel (30).

9. Automatisierte Fertigungsstrasse gemäß einem der Ansprüche 6 und 7, dadurch gekennzeichnet, daß jeder Zapfen (13) wenigstens teilweise rotierbar angebracht ist, während ein Rotations-Antriebsmittel (32, 33) für die Zapfen derart vorgesehen ist, daß es nach Wunsch die Vorformlinge auf wenigstens einem Teil ihrer Bahn in der Heizvorrichtung rotierend bewegen kann.

10. Automatisierte Fertigungsstrasse gemäß einem der Ansprüche 1 bis 9, dadurch gekennzeichnet, daß die Heizvorrichtung in ihrem oberen Teil ein Gebläse (38) aufweist, das dazu dient, oberhalb einer im wesentlichen durch die Gleitschienen (5) der Heizvorrichtung definierten Ebene eine nach unten gerichtete Luftströmung zu erzeugen.

## Claims

1. Automated production line for making hollow articles from tubular thermoplastic preforms (4) each provided at one open end with a ring (6) and possibly a counter-ring (7), and comprising at least one apparatus (1) for feeding the preforms, one apparatus (2) for heating the preforms and one apparatus (3) for blow-moulding the finished products, said production line being characterised in that the apparatus are arranged such that said preforms are conveyed at least from the feeding apparatus (1) to at least the outlet of the heating apparatus (2) passing inside said heating apparatus, by means of at least one pair of rails (5) on which each preform slides through the ring (6) and/or the counter-ring (7) with which it is provided, its open end pointing upwards.

2. Automated production line as in claim 1, characterised in that the feeding apparatus (1) comprises a means (1′) for loading the preforms, a means (1˝) for lifting the latter to a means (1˝′) for straightening and distributing the preforms, and at least one pair of rails (5) for discharging the preforms which is disposed between said distributing means (1˝′) and the heating apparatus (2).

3. Automated production line as in one of claims 1 and 2, characterised in that the heating apparatus (2) comprises at least one pair of rails (5) for sliding on which the preforms are moved between an inlet station connected to the feeding apparatus (1) and an outlet station connected to the moulding apparatus (3) in front of at least one heating furnace (9 to 11), the preforms being entrained in translation between the inlet and outlet stations respectively by an entrainment means (13, 14a, 14b, 15a, 15b, 16).

4. Automated production line as in claim 3, characterised in that the inlet station of the heating apparatus comprises a distributor (12) for preforms and the outlet station a recovery means (30) to discharge each preform to the moulding apparatus (3).

5. Automated production line as in one of claims 3 and 4, characterised in that the rails (5) of the heating apparatus are provided with or fixed to tubes (35a, 35b) for circulating a cooling fluid, said tubes being arranged for the major part above the plane defined by the rails on which the preforms slide.

6. Automated production line as in one of claims 3 to 5, characterised in that the means for entrainment of the preforms of the heating apparatus comprises a plurality of entrainment fingers (13) which are moved in an endless movement along a path comprising at least one part parallel with the sliding rails of said heating apparatus and which are each designed to be introduced through an end piece (18) into the open end of a preform to entrain it in its movement, each finger engaging through its end piece (18) with a preform in the inlet station and releasing it in the outlet station.

7. Automated production line as in claim 6, characterised in that the fingers (13) are mounted on supports (17) fixed on a pair of chains (15a, 15b) which are closed and moved in substantially vertical planes, each finger having its end piece (18) engaged with a preform during its passage in the lower part of the path, which part is parallel with the sliding rails (5) of the heating apparatus.

8. Automated production line as in ail of claims 4 and 7, characterised in that the end piece (18) of each finger (13) is mounted so as to be able to slide axially between at least two positions, whereas cams (28, 29) are provided at the inlet and outlet stations respectively of the heating apparatus so as to raise and/or hold said end piece partially raised on the one hand just before its introduction into the preform and on the other hand just before the discharge of said preform by the recovery means (30).

9. Automated production line as in one of claims 6 and 7, characterised in that each finger (13) is mounted at least partially rotatable, whereas a means (32, 33) for entrainment in rotation of the fingers is provided so as to be able to entrain the preforms in rotation at will over at least one part of their path in the heating apparatus.

10. Automated production line as in one of claims 1 to 9, characterised in that the heating apparatus comprises a blower (38) in its upper part designed to create a ventilation directed downards above a plane defined substantially by the sliding rails (5) of the heating apparatus.
